# EUROPÄISCHE PATENTSCHRIFT

(11) **EP 2 718 368 B1**
(45) Veröffentlichungstag und Bekanntmachung des Hinweises auf die Patenterteilung: **26.04.2017**
(21) Anmeldenummer: 12723445.8
(22) Anmeldetag: 21.05.2012
(51) Int. Cl.: C08L 27/12, C08K 3/22, F16L 11/06

(54) **BISPHENOLISCH VERNETZTE UND SÄUREBESTÄNDIGE FLUORKAUTSCHUKMISCHUNG UND SCHLAUCH, DER EIN SAURES MEDIUM TRANSPORTIERT, INSBESONDERE EIN DIESELPARTIKELFILTERSCHLAUCH ODER DRUCKDIFFERENZSCHLAUCH**
BISPHENOLICALLY CROSS-LINKED AND ACID-RESISTANT FLUORINATED RUBBER BLEND, AND A TUBE THAT CONVEYS AN ACIDIC MEDIUM, PARTICULARLY A DIESEL PARTICULATE FILTER TUBE OR A PRESSURE DIFFERENTIAL TUBE
MÉLANGE DE CAOUTCHOUC FLUORÉ RÉTICULÉ PAR LA VOIE BISPHÉNOLIQUE ET RÉSISTANT AUX ACIDES, ET TUYAU QUI TRANSPORTE UN MILIEU ACIDE, EN PARTICULIER TUYAU DE FILTRE À PARTICULES DIESEL OU TUYAU DE DIFFÉRENCE DE PRESSION

(30) Priorität: 07.06.2011 DE 102011050882
(43) Veröffentlichungstag der Anmeldung: 16.04.2014
(73) Patentinhaber: ContiTech Schlauch GmbH, 30165 Hannover (DE)
(72) Erfinder: BAUMUNG, Jürgen, 37191 Katlenburg (DE)
(74) Vertreter: Preusser, Andrea
(86) Internationale Anmeldenummer: PCT/EP2012/059333
(87) Internationale Veröffentlichungsnummer: WO 2012/168053

(56) Entgegenhaltungen:
- EP-A1- 2 019 127
- WO-A1-00/13891
- WO-A1-2004/078470
- WO-A2-02/44265
- WO-A2-03/037621

## Beschreibung

Die Erfindung betrifft einen Schlauch, der ein saures Medium transportiert und wenigstens folgenden Schichtenaufbau aufweist:
- eine Innenschicht als Sperrschicht zum sauren Medium, die aus einer bisphenolisch vernetzten Fluorkautschukmischung besteht, die Ca(OH)₂ als Aktivator und Säurefänger enthält; sowie
- eine Außenschicht aus einer vernetzten Kautschukmischung.
Im einfachsten Fall ist der Schlauch ein Zwei-Lagen-Schlauch ohne eingebettete Festigkeitsträgerschicht, gebildet also ausschließlich aus einer Innenschicht (z.B. FKM) und einer Außenschicht (z.B. AEM). In diesem Zusammenhang wird auf das Duplex-Extrusions-Verfahren verwiesen.
Zumeist ist jedoch eine Festigkeitsträgerschicht, die ein- oder mehrlagig ausgebildet zwischen der Innenschicht und der Außenschicht angeordnet ist, vorhanden.
Ein Schlauch mit dem vorgenannten Grundaufbau, der neben der Festigkeitsträgerschicht noch weitere Schichten aufweisen kann, ist beispielsweise in folgender Patentliteratur näher beschrieben.
DE 41 18 023 A1
DE 10 2008 037 417 A1
DE 10 2009 026 254 A1
DE 10 2010 000 180 A1
EP 0 559 169 A1
EP 1 496 298 A2
WO 2004/029493 A1
US 4 273 160
US 2009/0211660 A1

In Verbindung mit diesem Schlauchaufbau, insbesondere in Verbindung mit einer eingebetteten Festigkeitsträgerschicht, sind der Dieselpartikelfilterschlauch (DPF) und der Druckdifferenzschlauch für die Automobilindustrie besonders zu erwähnen, wobei das Medium Abgase sind, die zumeist mit einer Säure beladen sind, insbesondere in Form einer organischen Säure, beispielsweise Essigsäure. Für diesen Zweck werden Kautschukmischungen hergestellt, die dann beispielsweise extrudiert und zu Formschläuchen vulkanisiert werden.

Für die Innenschicht mit Sperrschichtfunktion gegenüber dem zu transportierenden Medium wird wegen seiner Medienbeständigkeit sowie hohen Temperaturbeständigkeit insbesondere eine Fluorkautschukmischung eingesetzt. In der Vergangenheit erfolgte hier eine peroxidische Vernetzung, wie bspw. aus WO 02/44265 A2 bekannt ist. Bei diesen Fluorkautschukmischungen wurden FKM-Typen mit einem eingebauten sogenannten "Cure-Site-Monomer" verwendet. Der hier verwendete Begriff bedeutet ein Monomer mit funktioneller chemischer Gruppe, die mit dem peroxidischen Vernetzungsmittel reagiert.

Je nach FKM-Hersteller entsteht bei der Vulkanisation eine Halogenverbindung, beispielsweise ein "Iod-Methan", das bei verschiedenen Anwendungsfällen den Drucksensor des Partikelfilters schädigt, verbunden mit einem Ausfall.

Unter diesem Aspekt ist man dann dazu übergegangen, eine bisphenolisch vernetzte Kautschukmischung einzusetzen. Ein "Cure-Site-Monomer" ist für die Vernetzung nicht erforderlich. Bisphenolisch vernetzte Fluorkautschukmischungen erfordern Ca(OH)₂ als Aktivator und Säurefänger. In EP 2 019 127 A1 wird allerdings darauf hingewiesen, dass die Verwendung von Metalloxiden und / oder Metallhydroxiden in Mengen von mehr als 2 phr hinsichtlich der physikalischen Eigenschaften nachteilig sind.
Seitens der Automobilindustrie wurden schließlich zusätzliche Bedingungen gestellt, wonach die Sperrschicht aus einer säurebeständigen Fluorkautschukmischung bestehen muss, was mit den bisher auf dem Markt existierenden bisphenolisch vernetzten FKM-Mischungsrezepturen nicht oder nur unzureichend zu realisieren war.
Im Hintergrund der hier näher erläuterten FKM-Problematik besteht die Aufgabe der Erfindung darin, einen Schlauch bereitzustellen, dessen Innenschicht als Sperrschicht gegenüber einem sauren Medium über eine gute Säurebeständigkeit verfügt, insbesondere bei einem ph-Wert > 1-2.
Gelöst wird diese Aufgabe dadurch, dass die Fluorkautschukmischung der Innenschicht MgO zwischen 0 und 0,9 phr enthält, und dass der Anteil an Ca(OH)₂ 2 bis 4 phr beträgt. In der vorliegenden Anmeldung, muss die Menge an MgO vergleichsweise niedrig sein d.h. die Menge MgO beträgt zwischen 0 und 0,9 phr, bevorzugt zwischen 0 und 0,5 phr, ganz besonders bevorzugt 0 phr.
Da sehr viele Kautschukmischungen unabhängig vom Kautschuktyp als Mischungsingredienzien auch MgO enthalten, ist es überraschend, dass eine MgO-freie Kautschukmischung hierzu überhaupt anvisiert wird, zumal bei der Innenschicht des Schlauches bislang die allgemeine Standard-Rezepturdosierung von 6 phr Ca(OH)₂ und 3 phr MgO zum Einsatz gelangte.

Das Ca(OH)₂ wird benötigt, um die Vernetzung zu aktivieren. Ferner dient es schließlich auch als Säurefänger. Wichtig ist dabei, dass das Ca(OH)₂ nur in einer Menge von 2 bis 4 phr vorhanden ist. Höhere Mengenanteile verschlechtern das Eigenschaftsbild der Fluorkautschukmischung.

Kautschukmischungen enthalten neben dem Vernetzungssystem, umfassend ein Vernetzungsmittel und einen Beschleuniger, üblicherweise noch weitere Mischungsingredienzien, insbesondere einen Füllstoff, beispielsweise Ruß. Je nach der Art der Kautschukmischung, die bei einem mehrschichtigen Schlauch verschiedenartig sein kann, umfassen die Mischungsingredienzien noch ein Verarbeitungshilfsmittel und/oder einen Weichmacher und/oder ein Alterungsschutzmittel sowie gegebenenfalls weitere Zusatzstoffe, beispielsweise Fasern und Farbpigmente, wobei Farbpigmente insbesondere für die Außenschicht von Bedeutung sein können.

Im Folgenden wird der erfindungsgemäße Schlauch anhand eines Vier-Lagen-Schlauches, der besonders häufig eingesetzt wird, näher vorgestellt, und zwar unter Angaben von vorteilhaften werkstofflichen Gesichtspunkten.

### - Innenschicht

Die MgO-freie Fluorkautschukmischung enthält 2 bis 4 phr an Ca(OH)₂. Die besten Ergebnisse werden dabei bei einem Mengenbereich von 2 bis 3 phr erzielt. Die hier verwendete Kurzbezeichnung phr bedeutet per hundred rubber.

Der in der Fluorkautschukmischung eingesetzte Fluorkautschuk ist vorzugsweise ein Co-Polymer und / oder Ter-Polymer, wobei der Fluoranteil 60 bis 70 % beträgt.

Das Vernetzungssystem umfasst Bisphenol als Vernetzungsmittel sowie einen Beschleuniger, beispielsweise ein Phosphoniumsalz und / oder ein Ammoniumsalz.

### - Außenschicht

Die Kautschukkomponente der Kautschukmischung ist vorzugsweise FKM, ACM, AEM, EPM, EPDM oder VMQ oder ein Verschnitt der vorgenannten Kautschukkomponenten mit wenigstens einer weiteren Kautschukkomponente, beispielsweise ein AEM/EPDM-Verschnitt. Zumeist werden jedoch verschnittfreie Kautschukmischungen eingesetzt.

Da an die Außenschicht andere Anforderungen gestellt werden als an die Innenschicht, muss hier nicht die Fluorkautschukmischung der Innenschicht verwendet werden. Häufig genügen hier die FKM-Standardmischungen nach dem Stand der Technik. Hat auch die Außenschicht Kontakt zu einem sauren Medium, so bietet sich dann jedoch die gleiche Lösung an wie für die Innenschicht.

Kautschukmischungen auf der Basis von ACM und oder AEM werden insbesondere diaminisch vernetzt.

Kautschukmischung auf der Basis von EPM, EPDM sowie VMQ unterliegen wiederum insbesondere einer peroxidischen Vernetzung.

Was die Werkstoffe ACM, AEM, EPM und EPDM für die Schlauchherstellung betrifft, so wird insbesondere auf die Offenlegungsschrift DE 10 2009 026 254 A1 verwiesen.

Hinsichtlich des Werkstoffes VMQ wird insbesondere auf die beiden Offenlegungsschriften DE 44 22 048 A1 und DE 10 2006 058 470 A1 verwiesen.

### - Festigkeitsträgerschicht

Die Festigkeitsträgerschicht ist aus einem Gewebe, Gewirke oder Gestrick gebildet, insbesondere auf der Basis eines textilen Werkstoffes. Die diesbezüglichen Werkstoffe können ein Polyamid (PA), Polyimid (PI), ein Aramid, insbesondere para-Aramid oder meta-Aramid, ein Polyvinylacetal (PVA), ein Polyetheretherketon (PEEK), ein Polyester, insbesondere Polyethylentherephthalat (PET) oder Polyethylen-2,6-naphthalat (PEN), ein Polysulfon (PSU), ein Polyoxadiazol (POD), ein Polyphenylen oder Polyphenylenderivat, insbesondere ein Polyphenylensulfid (PPS), oder Glasfasern sein. Auch Hybridkonzepte, beispielsweise in Form eines Mischzwirns, können zum Einsatz gelangen. Im Rahmen einer neueren Schlauchentwicklung (DE 10 2008 037 417 A1) kommt beispielsweise ein Hybridkonzept aus PPS und PA zur Anwendung. Das PPS als Hochleistungswerkstoff trägt zu einer hohen Festigkeit bei, während das PA neben dem Festigkeitsträgerbeitrag auch über seine Haftaktivierbarkeit zu einer verbesserten Haftung gegenüber dem umgebenden elastomeren Werkstoff beiträgt.

Bei einem Dieselpartikelfilterschlauch öder Druckdifferenzschlauch wird zumeist ein Aramid für die Festigkeitsträgerschicht eingesetzt.

### - Zwischenschicht

Die Zwischenschicht hat auch die Bedeutung einer Haftschicht zwischen der Innenschicht und der Festigkeitsträgerschicht. Die Kautschukkomponente der Kautschukmischung ist vorzugsweise ACM oder AEM oder ein Verschnitt der vorgenannten Kautschukkomponenten mit wenigstens einer weiteren Kautschukkomponente, beispielsweise wiederum ein AEM/EPDM.Verschnitt. Zumeist werden jedoch verschnittfreie Kautschukmischungen eingesetzt, wobei diaminisch vernetztes AEM von besonderer Bedeutung ist. Auch wird insbesondere auf die Offenlegungsschrift DE 10 2009 026 254 A1 verwiesen.

Auch ein Drei-Lagen-Schlauch, bestehend aus einer Innenschicht, Festigkeitsträgerschicht und Außenschicht, wird häufig eingesetzt.

Im Folgenden werden die hier verwendeten Kurzbezeichnungen der Kautschukkomponenten für die Kautschukmischungen der Innenschicht, Zwischenschicht und Außenschicht des Schlauches zusammenfassend erläutert:
- FKM: Fluorkautschuk
- ACM: Acrylat-Kautschuk
- AEM: Ethylen-Acrylat-Kautschuk
- EPM: Ethylen-Propylen-Kautschuk (Mischpolymerisat)
- EPDM: Ethylen-Propylen-Dien-Kautschuk (Mischpolymerisat)
- VMQ: Silikonkautschuk
Eingesetzt wird der erfindungsgemäße Schlauch insbesondere für einen Dieselpartikelfilterschlauch oder einen Druckdifferenzschlauch. In Verbindung mit dem Dieselpartikelfilterschlauch sorgt der neue FKM-Werkstoff für die Innenschicht unter Nichtbildung von Halogenverbindungen, beispielsweise von Iod-Methan, dass der Drucksensor des Partikelfilters nicht geschädigt wird.
Die Erfindung betrifft ferner eine Fluorkautschukmischung, die bisphenolisch vernetzt ist und Ca(OH)₂ als Aktivator und Säurefänger sowie zusätzlich insbesondere einen Füllstoff, beispielsweiße Ruß, sowie gegebenenfalls weitere Mischungsingredienzien enthält. Diesbezüglich wird auf das bereits im Zusammenhang von Kautschukmischungsingredienzien Erwähnte verwiesen.
Die Aufgabe ist ferner, eine säurebeständige Fluorkautschukmischung bereitzustellen, die über eine gute Säurebeständigkeit verfügt, insbesondere bei einem ph-Wert > 1-2, sowie ferner vielfältig einsetzbar ist.

Gelöst wird diese Aufgabe dadurch, dass die Fluorkautschukmischung MgO zwischen 0 und 0,9 phr enthält, und dass der Anteil an Ca(OH)₂ 2 bis 4 phr beträgt.

Frei von MgO bedeutet in der vorliegenden Anmeldung, dass die Menge an MgO vergleichsweise niedrig sein muss, d.h. die Menge MgO beträgt zwischen 0 und 0,9 phr, bevorzugt zwischen 0 und 0,5 phr, ganz besonders bevorzugt 0 phr.

Die MgO-freie Fluorkautschukmischung enthält 2 bis 4 phr an Ca(OH)₂. Die besten Ergebnisse werden dabei bei einem Mengenbereich von 2 bis 3 phr erzielt.
Der in der Fluorkautschukmischung eingesetzte Fluorkautschuk ist vorzugsweise ein Co-Polymer oder Ter-Polymer, wobei der Fluoranteil 60 bis 70 % beträgt.

Desweiteren werden nun Versuchsreihen mit vier Probekörpern I bis IV in Tabellen 1a und 1b und mit neun Probekörpern V bis XIII in Tabellen 2a und 2b beschrieben, und zwar auf der Basis eines Plattenmaterials aus einer bisphenolisch vernetzten Fluorkautschukmischung. Bei jeweils gleicher Dimension der Platte bestand der Probekörper I aus einer Standardmischung, während die Probekörper II bis IV eine Fluorkautschukmischung mit den kennzeichnenden Merkmalen des Anspruchs 9 umfasste. Die Probekörper V bis XI sind ebenfalls erfindungsgemäß, während es sich bei den Probekörpern XII und XIII um Vergleichsmischungen mit einem höheren Gehalt an MgO handelt. Die Tabellen 1a und 1b enthalten nun die jeweilige Zusammensetzung in phr und die Tabellen 2a und 2b die Prüfkriterien und Prüfergebnisse fest.

**Tabelle 1a**

| **Bestandteile** | **I** | **II** | **III** | **IV** |
|---|---|---|---|---|
| FKM | 100,00 | 100,00 | 100,00 | 100,00 |
| Ca(OH)₂ (a) | 6,00 | 2,00 | 3,00 | 4,00 |
| MgO (b) | 3,00 | - | - | - |

| | | | | |
|---|---|---|---|---|
| (a) Calciumdihydroxid (b) Magnesiumoxid | | | | |

**Tabelle 1b**

| **Bestandteile** | **V** | **VI** | **VII** | **VIII** | **IX** | **X** | **XI** | **XII** | **XIII** |
|---|---|---|---|---|---|---|---|---|---|
| FKM | 100 | 100 | 100 | 100 | 100 | 100 | 100 | 100 | 100 |
| Ca(OH)₂ (a) | 2 | 3 | 4 | 2 | 3 | 4 | 2,5 | 2 | 3 |
| MgO (b) | -- | -- | -- | 0,5 | 0,5 | 0,5 | -- | 1 | 3 |

| | | | | | | | | | |
|---|---|---|---|---|---|---|---|---|---|
| (a) Calciumdihydroxid (b) Magnesiumoxid | | | | | | | | | |

**Tabelle 2a**

| **Prüfkriterien** | **Einheit** | **I** | **II** | **III** | **IV** |
|---|---|---|---|---|---|
| Prüfung c) | | | | | |
| **Anlieferungszustand** | | | | | |
| Dichte | | 1,83 | 1,81 | 1,82 | 1,82 |
| Härte | Shore A | 69 | 68 | 69 | 72 |
| Zugfestigkeit | N/mm² | 9,9 | 7,7 | 8,4 | 8,2 |
| Reißdehnung | % | 312 | 401 | 353 | 317 |
| **Essigsäure ph 3 (5 Tage, 95°C)** | | | | | |
| Härteänderung | Shore A | -18 | -1 | -2 | -7 |
| Zugfestigkeit | N/mm² | 7,0 | 7,6 | 8,1 | 8,4 |
| Reißdehnung | % | 110 | 350 | 286 | 280 |
| Gewichtsänderung | % | 158 | 2,8 | 5,7 | 12,7 |
| **Essigsäure ph 3 (21 Tage, 95°C)** | | | | | |
| Härteänderung | Shore A | | -2 | -2 | -10 |
| Zugfestigkeit | N/mm² | | 7,9 | 8,6 | 8,6 |
| Reißdehnung | % | | 350 | 323 | 249 |
| Gewichtsänderung | % | | 3,1 | 8,3 | 28,5 |
| **Alterung bei** | | | | | |
| **94 Stunden und 250°C Umluft** | | | | | |
| Härteänderung | Shore A | 1 | 5 | 5 | 4 |
| Zugfestigkeit | N/mm² | 9,9 | 11,7 | 12,6 | 13,3 |
| Reißdehnung | % | 187 | 272 | 262 | 262 |

| | | | | | |
|---|---|---|---|---|---|
| c) vulkanisiertes Plattenmaterial mit einer Stärke von 2 mm | | | | | |

Bei dem Probekörper I, der MgO und eine erhöhte Menge an Ca(OH)₂ enthielt, traten unter dem Einfluss von Essigsäure (ph 3) signifikante Änderungen des Eigenschaftsbildes des FKM-Werkstoffes auf. Bei den Probekörpern II bis IV traten dagegen keine oder nur unwesentliche Änderungen des Eigenschaftsbildes auf.

**Tabelle 2b**

| **Prüfkriterien** | **Einheit** | **V** | **VI** | **VII** | **VIII** | **IX** | **X** | **XI** | **XII** | **XIII** |
|---|---|---|---|---|---|---|---|---|---|---|
| Prüfung c) | | | | | | | | | | |
| **Anlieferungszustand** | | | | | | | | | | |
| Dichte | | 1,82 | 1,82 | 1,83 | 1,82 | 1,83 | 1,83 | 1,82 | 1,83 | 1,84 |
| Härte | Shore A | 67 | 73 | 74 | 70 | 73 | 73 | 72 | 71 | 73 |
| Zugfestigkeit | N/mm² | 7,7 | 11,1 | 11,3 | 10,1 | 11,4 | 11,5 | 11,4 | 11,1 | 11,3 |
| Reißdehnung | % | 274 | 236 | 237 | 290 | 253 | 241 | 302 | 289 | 259 |
| Modul 100% | N/mm² | 3,1 | 4,6 | 4,8 | 3,3 | 4,7 | 4,8 | 3,7 | 3,8 | 4,4 |
| **Essigsäure 1N** | | | | | | | | | | |
| **(7 Tage, 95°C)** | | | | | | | | | | |
| Härteänderung | Shore A | -1 | -2 | -5 | -1 | -2 | -5 | -2 | -13 | -13 |
| Zugfestigkeit | N/mm² | 8,8 | 9,6 | 10,9 | 10,3 | 9,6 | 10,6 | 10,7 | 9,4 | 9,8 |
| Reißdehnung | % | 311 | 210 | 222 | 262 | 188 | 203 | 299 | 214 | 150 |
| Gewichtsänderung | % | 0,7 | 2,7 | 12,6 | 5,3 | 10,1 | 19,6 | 0,6 | 7 | 57 |
| Volumenänderung | % | 1,5 | 4,9 | 22,1 | 9,3 | 17,9 | 34,3 | 1,0 | 16,1 | 96,0 |
| **Essigsäure 1N** | | | | | | | | | | |
| **(21 Tage, 95°C)** | | | | | | | | | | |
| Härteänderung | Shore A | -2 | -3 | -6 | -2 | -4 | -4 | -2 | -5 | -18 |
| Zugfestigkeit | N/mm² | 8,7 | 11,1 | 10,8 | 10,3 | 9,9 | 9,6 | 10,8 | 8,8 | 6,6 |
| Reißdehnung | % | 307 | 269 | 222 | 281 | 203 | 165 | 329 | 177 | 91 |
| Gewichtsänderung | % | 1,1 | 3,0 | 22,2 | 6,3 | 16,1 | 36,4 | 0,8 | 19 | 103 |
| Volumenänderung | % | 2,1 | 5,7 | 39,8 | 11,3 | 29 | 64,9 | 1,6 | 34 | 186 |

| | | | | | | | | | | |
|---|---|---|---|---|---|---|---|---|---|---|
| c) vulkanisiertes Plattenmaterial mit einer Stärke von 2 mm | | | | | | | | | | |

Die Prüfkörper V bis XI enthalten neben maximal 5 phr Ca(OH)₂ zusätzlich maximal 0,9 phr MgO. Verglichen mit den Prüfkörpern XII und XIII, die einen MgO-Anteil von 1 phr oder größer besitzen, traten dabei unter dem Einfluss von Essigsäure keine oder nur unwesentliche Änderungen des Eigenschaftsbildes des FKM-Werkstoffes auf.

Die Erfindung wird nun anhand eines Ausführungsbeispiels unter Bezugnahme auf eine schematische Zeichnung erläutert.

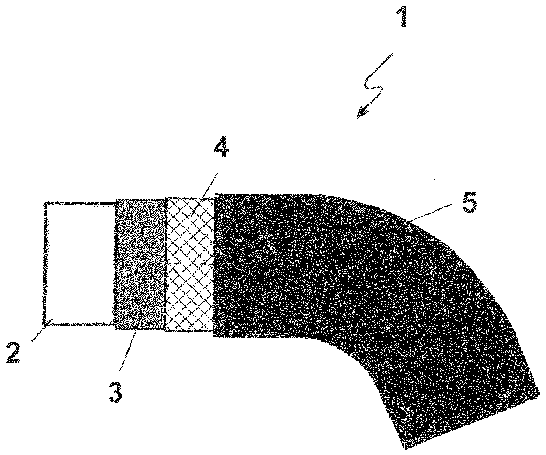

Die einzige Figur zeigt einen Schlauch 1, der als Krümmerschlauch ausgebildet ist. Der Schlauch weist dabei folgenden Schichtenaufbau mit folgender beispielhafter Werkstoffkonzeption auf:
- Innenschicht 2:: bisphenolisch vernetzte Fluorkautschukmischung, die frei von MgO ist und 2,5 phr Ca(OH)₂ enthält
- Zwischenschicht 3: diaminisch vernetzte und verschnittfreie AEM-Kautschukmischung
- Festigkeitsträgerschicht 4: Textilfäden aus Aramid
- Außenschicht 5: diaminisch vernetzte und verschnittfreie AEM-Kautschukmischung

### Bezugszeichenliste

### (Teil der Beschreibung)

- 1: Schlauch
- 2: Innenschicht (Sperrschicht)
- 3: Zwischenschicht
- 4: Festigkeitsträgerschicht
- 5: Außenschicht

## Patentansprüche

1. Schlauch (1), der ein saures Medium transportiert und wenigstens folgenden Schichtenaufbau aufweist:
- eine Innenschicht (2) als Sperrschicht zum sauren Medium, die aus einer bisphenolisch vernetzten Fluorkautschukmischung besteht, die Ca(OH)2 als Aktivator und Säurefänger enthält; sowie
- eine Außenschicht (5) aus einer vernetzten Kautschukmischung;
**dadurch gekennzeichnet, dass** die Fluorkautschukmischung der Innenschicht (2) MgO zwischen 0 und 0,9 phr enthält, und dass der Anteil an Ca(OH)₂ 2 bis 4 phr beträgt.

2. Schlauch nach Anspruch 1, **dadurch gekennzeichnet, dass** dieser frei von einer Festigkeitsträgerschicht ausschließlich aus einer Innenschicht und Außenschicht besteht.

3. Schlauch nach Anspruch 1, **dadurch gekennzeichnet, dass** zwischen der Innenschicht (2) und der Außenschicht (5) eine Festigkeitsträgerschicht (4) angeordnet ist, die ein- oder mehrlagig ausgebildet ist.

4. Schlauch nach einem der Ansprüche 1 bis 3 **dadurch gekennzeichnet, dass** die Kautschukkomponente der Kautschukmischung für die Außenschicht (5) FKM, ACM, AEM, EPM, EPDM oder VMQ oder ein Verschnitt der vorgenannten Kautschukkomponenten mit wenigstens einer weiteren Kautschukkomponente ist.

5. Schlauch nach einem der Ansprüche 3 bis 4, **dadurch gekennzeichnet, dass** zwischen der Innenschicht (2) und der Festigkeitsträgerschicht (4) eine Zwischenschicht (3) aus einer vernetzten Kautschukmischung vorhanden ist.

6. Schlauch nach Anspruch 5, **dadurch gekennzeichnet, dass** die Kautschukkomponente der Kautschukmischung für die Zwischenschicht (3) ACM oder AEM oder ein Verschnitt der vorgenannten Kautschukkomponenten mit wenigstens einer weiteren Kautschukkomponente ist.

7. Schlauch nach einem der Ansprüche 1 bis 6, **dadurch gekennzeichnet, dass** dieser ein Dieselpartikelfilterschlauch oder Druckdifferenzschlauch ist.

8. Fluorkautschukmischung, die bisphenolisch vernetzt ist und Ca(OH)₂ als Aktivator und Säurefänger enthält, **dadurch gekennzeichnet, dass** die Fluorkautschukmischung MgO zwischen 0 und 0,9 phr enthält, und dass der Anteil an Ca(OH)₂ 2 bis 4 phr beträgt.

9. Fluorkautschukmischung nach einem der Anspruch 8, **dadurch gekennzeichnet, dass** der Fluorkautschuk ein Co-Polymer oder Ter-Polymer ist.

10. Fluorkautschukmischung nach einem der Ansprüche 8 bis 9, **dadurch gekennzeichnet, dass** der Fluoranteil im Fluorkautschuk 60 bis 70 % beträgt.

## Claims

1. Hose (1) which conveys an acidic medium and has at least the following layer structure:
- as barrier layer with respect to the acidic medium, an internal layer (2) which is composed of a bisphenolically crosslinked fluorinated rubber mixture which comprises Ca(OH)₂ as activator and acid scavenger; and also
- an external layer (5) made of a crosslinked rubber mixture;
**characterized in that** the fluorinated rubber mixture and the internal layer (2) comprises from 0 to 0.9 phr of MgO, and that the Ca(OH)₂ content is from 2 to 4 phr.

2. Hose according to Claim 1, **characterized in that** this is composed exclusively of an internal layer and external layer, with no reinforcement layer.

3. Hose according to Claim 1, **characterized in that** between the internal layer (2) and the external layer (5) there is a single- or multiple-ply reinforcement layer (4) arranged.

4. Hose according to any of Claims 1 to 3, **characterized in that** the rubber component of the rubber mixture for the external layer (5) is FKM, ACM, AEM, EPM, EPDM or VMQ or a blend of the abovementioned rubber components with at least one other rubber component.

5. Hose according to Claim 3 or 4, **characterized in that** between the internal layer (2) and the reinforcement layer (4) there is an intermediate layer (3) present made of a crosslinked rubber mixture.

6. Hose according to Claim 5, **characterized in that** the rubber component of the rubber mixture for the intermediate layer (3) is ACM or AEM or a blend of the abovementioned rubber components with at least one other rubber component.

7. Hose according to any of Claims 1 to 6, **characterized in that** this is a diesel particulate filter hose or pressure differential hose.

8. Fluorinated rubber mixture which has been bisphenolically crosslinked and comprises Ca(OH)₂ as activator and acid scavenger, **characterized in that** the fluorinated rubber mixture comprises from 0 to 0.9 phr of MgO and the Ca(OH)₂ content is from 2 to 4 phr.

9. Fluorinated rubber mixture according to Claim 8, **characterized in that** the fluorinated rubber is a copolymer or terpolymer.

10. Fluorinated rubber mixture according to Claim 8 or 9, **characterized in that** the fluorinated content in the fluorinated rubber is from 60 to 70%.

## Revendications

1. Tuyau (1), qui transporte un milieu acide et présente au moins la structure de couches suivante :
- une couche intérieure (2) en tant que couche d'arrêt pour le milieu acide, qui est constituée d'un mélange de caoutchouc fluoré réticulé au bisphénol, qui contient Ca(OH)₂ en tant qu'activateur et capteur d'acide ; ainsi que
- une couche extérieure (5) en un mélange de caoutchouc réticulé ;
**caractérisé en ce que** le mélange de caoutchouc fluoré de la couche intérieure (2) contient entre 0 et 0,9 pce de MgO, et **en ce que** la proportion de Ca(OH)₂ est de 2 à 4 pce.

2. Tuyau selon la revendication 1, **caractérisé en ce que** celui-ci est exclusivement constitué d'une couche intérieure et d'une couche extérieure sans couche de renfort.

3. Tuyau selon la revendication 1, **caractérisé en ce qu'**une couche de renfort (4), configurée à une ou plusieurs couches, est agencée entre la couche intérieure (2) et la couche extérieure (5).

4. Tuyau selon l'une quelconque des revendications 1 à 3, **caractérisé en ce que** le composant caoutchouc du mélange de caoutchouc pour la couche extérieure (5) est le FKM, l'ACM, l'AEM, l'EPM, l'EPDM ou le VMQ ou une coupe des composants caoutchouc susmentionnés avec au moins un autre composant caoutchouc.

5. Tuyau selon l'une quelconque des revendications 3 à 4, **caractérisé en ce qu'**une couche intermédiaire (3) en un mélange de caoutchouc réticulé est présente entre la couche intérieure (2) et la couche de renfort (4).

6. Tuyau selon la revendication 5, **caractérisé en ce que** le composant caoutchouc du mélange de caoutchouc pour la couche intermédiaire (3) est l'ACM ou l'AEM ou une coupe des composants caoutchoucs susmentionnés avec au moins un autre composant caoutchouc.

7. Tuyau selon l'une quelconque des revendications 1 à 6, **caractérisé en ce que** celui-ci est un tuyau de filtre à particules diesel ou un tuyau de différence de pression.

8. Mélange de caoutchouc fluoré, qui est réticulé au bisphénol et contient Ca(OH)₂ en tant qu'activateur et capteur d'acide, **caractérisé en ce que** le mélange de caoutchouc fluoré contient entre 0 et 0,9 pce de MgO, et **en ce que** la proportion de Ca(OH)₂ est de 2 à 4 pce.

9. Mélange de caoutchouc fluoré selon la revendication 8, **caractérisé en ce que** le caoutchouc fluoré est un copolymère ou un terpolymère.

10. Mélange de caoutchouc fluoré selon l'une quelconque des revendications 8 à 9, **caractérisé en ce que** la proportion de fluor dans le caoutchouc fluoré est de 60 à 70 %.
